# EUROPEAN PATENT APPLICATION

(11) **EP 2 754 607 A2**
(43) Date of publication of application: **16.07.2014**
(21) Application number: 13170228.4
(22) Date of filing: 03.06.2013
(51) Int. Cl.: B62L 1/16

(54) **Brake for a bicycle**

(30) Priority: 10.01.2013 US 201361751171 P; 15.03.2013 US 201313834175
(71) Applicant: Felt Racing, LLC, Irvine, California 92618 (US)
(72) Inventor: Short, Leonard Paul, Toronto, Ontario M9B 4C3 (CA); Schmider, John Paul, Etobicoke, Ontario M8X 1Z5 (CA); Loudon, Jonathan Paul, Toronto, Ontario M4K 2M2 (CA)
(74) Representative: Pallini Gervasi, Diego

(57) **Abstract**

The brake (10) disclosed herein provides a linear brake kinematic over a wide range of wheel rim sizes. The brake provides for the same brake feel and response to the rider throughout actuation of the brake lever. Also, the brake feel and response may be designed to be the same even if a different wheel rim size is mounted to the bicycle. In an aspect of the brake, this is accomplished by forming a curved configuration, namely, a cam profile (30, 32) on upper portions of left and right brake arms (18, 20). These upper portions (30, 32) of the left and right brake arms (18, 20) extend away from the wheel so that the cam profiles (30, 32) formed in the upper portions of the left and right brake arms (18, 20) may be made as long as necessary to accommodate the wide range of rim sizes.

## Description

### CROSS-REFERENCE TO RELATED APPLICATIONS

This application is a non-provisional patent application which claims priority to U.S. Provisional Patent Application Serial Number 61/751,171, filed on January 10, 2013, the entire contents of which is expressly incorporated herein by reference.

### STATEMENT RE: FEDERALLY SPONSORED RESEARCH/DEVELOPMENT

Not Applicable

### BACKGROUND

The various embodiments disclosed herein relate to a brake system for a bicycle.

A bicycle brake serves one basic purpose, specifically, to translate the force applied by the rider by way of a brake lever into a force that drives brake pads against the rim of a bicycle. The friction between the brake pads and the rim slows down or stops the bicycle. Thus the brake lever and the brake comprise a mechanical system that amplifies the rider's effort.

A key characteristic of the brake design is its brake kinematics or how the braking force behaves and feels to the rider as the rider depresses the brake lever. The brake kinematics defines the braking power of the brake as a function of depression of the brake lever. For example, the brake kinematics may provide a unit increase in brake force for unit travel of the brake lever. Moreover, riders utilize their bicycles for various purposes such as training and racing. To utilize the same bicycle for training and racing, the rider may switch out the bicycle wheels from their training wheels, typically having narrow rims, to their race wheels, which typically have wider rims. In order to do so, the rider must adjust the brake to accommodate the different rim widths. Unfortunately, current designs do not allow for simple changeovers between different rim sizes while maintaining a linear brake kinematic.

Accordingly, there is a need in the art for an improved brake.

### BRIEF SUMMARY

The various embodiments of the brake disclosed herein addresses the needs discussed above, discussed below and those that are known in the art.

The brake disclosed herein provides a linear brake kinematics over a very wide range of operation. In particular, the brake provides for linear brake kinematic when a wheel with a narrow rim is mounted to the bicycle. The same is also true in that the brake provides linear brake kinematics when a wheel with a wide rim is mounted to the bicycle. Moreover, the changeover from the narrow rim to the wide rim, and vice versa is quick and does not require substantial adjustments. The brake kinematic is designed so that a slope of the brake kinematic is linear and constant throughout the entire range of acceptable rim sizes for use with the brake. In an aspect this is accomplished by placing a curved configuration on the brake arm that is shaped to provide the linear brake kinematic. The brake additionally has adjustments for laterally positioning brake pads of the brake to align the brake pads to a wheel rim that is off-center (i.e. not aligned to the hub).

More particularly, a brake for a bicycle is disclosed. The brake may comprise a first brake arm, a second brake arm, a cam driver and a brake lever. The first brake arm may pivot about a first pivot axis. An upper portion of the first brake arm may define a first camming surface. A lower portion of the first brake arm may be capable of receiving a first brake pad.

The second brake arm may pivot about a second pivot axis. The second pivot axis may be set at a fixed distance away from the first pivot axis. An upper portion of the second brake arm may define a second camming surface. The first and second camming surfaces may have a mirror configurations of each other. A lower portion of the second brake arm may be capable of receiving a second brake pad.

The cam driver may be disposed between the first and second camming surfaces. The cam driver may maintain contact with the first and second camming surfaces between un-actuated and actuated positions of the brake.

The brake lever may be secured to a handlebar of the bicycle for actuating the brake.

The first and second camming surfaces formed in the upper portions of the brake arms may have a curved configuration so that a linearly increasing brake force is applied to a rim of the bicycle for each unit of displacement of the brake lever regardless of the size of the rim.

The first and second brake arms may be directly mounted to a common plate so that the first brake arm pivots about the first pivot axis and the second brake arm pivots about the second pivot axis. The common plate is mounted to a fork of the bicycle. The common plate may pivot with respect to the fork or the frame of the bicycle to laterally adjust brake pads of the brake to align the brake pads to an off center wheel rim.

The cam driver may be positioned on the first and second camming surface for rim widths between 19-28 mm. A unit linear displacement of the cam driver may translate into a unit angular displacement of the lower portion of the first and second brake arms so that a unit displacement of the brake lever produces a linear rise in brake force.

The lengths of the first and second camming surfaces may be sufficiently long so that a linear brake force is applied to the wheel rim for rim widths between 19 mm and 28 mm or wider, by solely changing a position of the cam driver on the first and second camming surfaces.

In another aspect, a method of fabricating a brake arm for providing a linear rise in brake force for each unit displacement of a brake lever is disclosed. The method may comprise the steps of selecting first, second and third linear positions of the cam driver; selecting first, second and third angular positions of a lower portion of a brake arm or linear displacements of the brake pads wherein the spacings between the first, second and third linear positions of the cam driver are proportional the spacings between the first, second and third angular positions of the lower portion or the linear displacement of the brake pads; mapping first, second and third positions of the cam driver on an upper portion of the brake arm; and creating a spline which connects the first, second and third positions of the cam driver on the upper portion of the brake arm.

The step of mapping may include the steps of positioning the cam driver at a first linear position and the brake arm at a first position; marking the cam driver on the brake arm to identify the first position of the cam driver on the brake arm; positioning the cam driver at a second linear position and the brake arm at a second rotary position; marking the cam driver on the brake arm to identify the second position of the cam driver on the brake arm; positioning the cam driver at a third linear position and the brake arm at a third rotary position; and marking the cam driver on the brake arm to identify the third position of the cam driver on the brake arm.

The spline creation step may include the step of creating a curved spline defined by the marks of the cam driver representing the first, second and third positions.

The marking step may include the step of outlining a contact surface of the cam driver on the brake arm.

The mapping and creating steps may be accomplished with a computer aided drafting computer program having a representation of the cam driver and the brake arm. Alternatively, the creating step may be accomplished by way of a mathematical model.

The creating step may include the step of defining the spline as a B-spline, P-spline, other splines known in the art or combinations thereof.

### BRIEF DESCRIPTION OF THE DRAWINGS

These and other features and advantages of the various embodiments disclosed herein will be better understood with respect to the following description and drawings, in which like numbers refer to like parts throughout, and in which:
Figure 1 is a perspective view of a brake;
Figure 2 illustrates the brake shown in Figure 1 used in conjunction with a wide rim;
Figure 3 illustrates the brake shown in Figure 1 used in connection with a narrow rim;
Figure 4 illustrates the brake shown in Figure 1 wherein brake pads are adjusted laterally by rotating the brake to account for an off-center rim;
Figure 5 illustrates left and right brake arms of the brake shown in Figure 1;
Figure 6 illustrates a return spring used to traverse the left and right brake arms to a release position when a brake lever of the brake is released;
Figure 7 illustrates a backing plate for mounting the brake to a fork or a frame (e.g., adjacent to a bottom bracket shell) of a bicycle and mounting the various components of the brake cooperatively to each other;
Figure 8 illustrates a cam driver for activating the brake upon actuation of the brake lever;
Figure 9 illustrates a cover plate of the brake shown in Figure 1;
Figure 10 graphically illustrates brake kinematic characteristics of the brake defined by or defining a cam profile formed in the left and right brake arms;
Figure 11 illustrates a first position of the brake used to define the cam profile;
Figure 12 illustrates a second position of the brake used to define the cam profile;
Figure 13 illustrates a third position of the brake used to define the cam profile;
Figure 14 illustrates a fourth position of the brake used to define the cam profile;
Figure 15 illustrates outlines of rollers of the cam driver superimposed on the brake levers shown in Figures 11 - 14 for defining a spline of the cam profile;
Figure 16 illustrates a rear view of the brake shown in Figure 1;
Figure 17 illustrates the brake integrated into a fork and a cover disposed over the brake to increase aerodynamics;
Figure 18 illustrates the brake integrated into a frame adjacent to the bottom bracket shell of a bicycle and a cover disposed over the brake to increase aerodynamics;

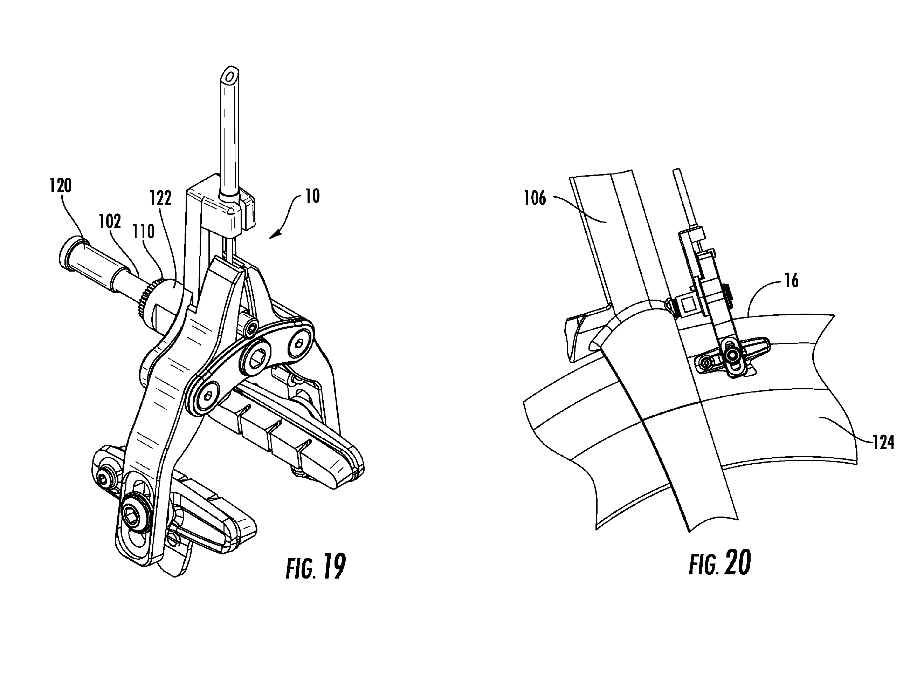

Figure 19 illustrates the brake shown in Figure 14 for mounting to an exterior of a bicycle; and
Figure 20 illustrates the brake shown in Figure 19 for mounting to a fork of the bicycle.

### DETAILED DESCRIPTION

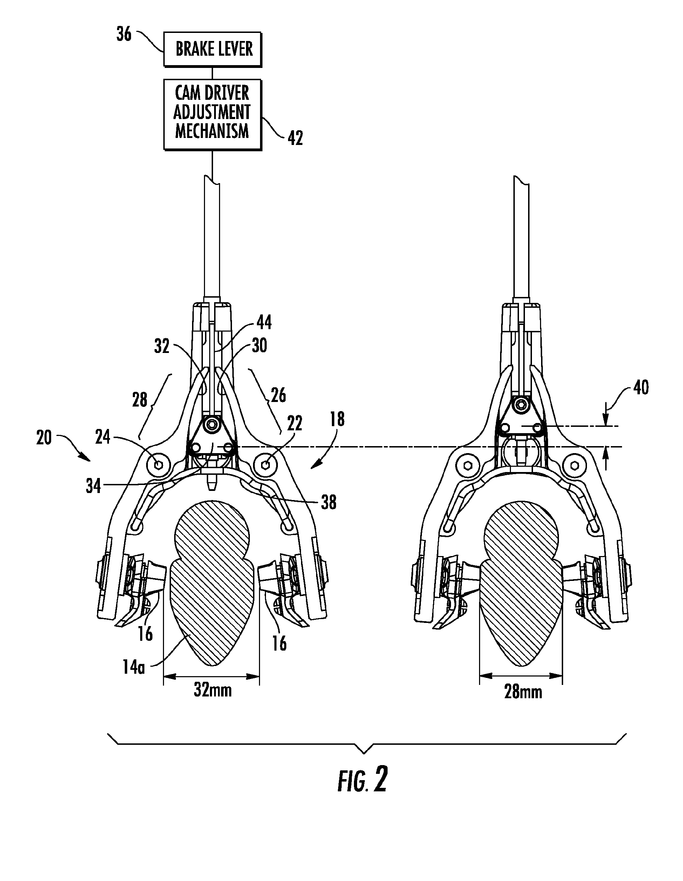

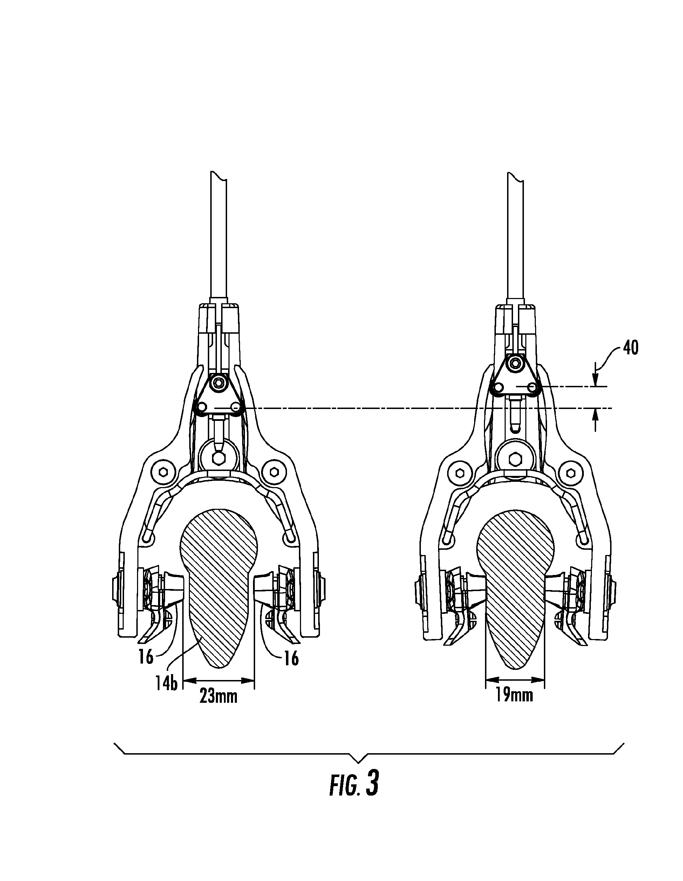

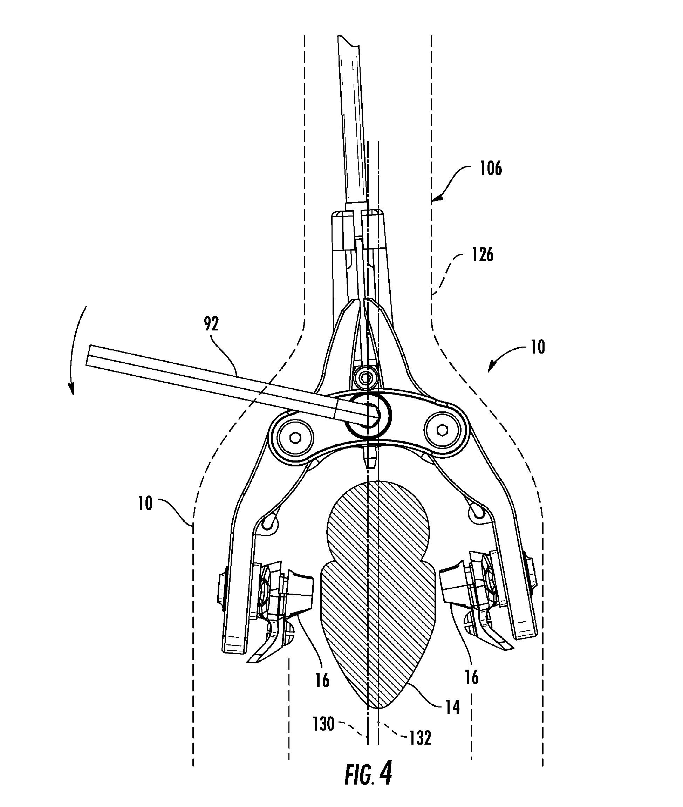

Referring now to the drawings, a brake 10 for a bicycle 12 is shown. The brake 10 is capable of receiving a wide rim 14a or a narrow rim 14b without significant adjustments to the brake 10 (see Figures 2 and 3) except for (1) spreading open the brake pads 16 or closing down the brake pads 16 as the case may be and (2) adjusting for lateral positioning of the brake pads 16 which may be needed due to an off-center rim 14 (see Figure 4). Accordingly, the brake 10 provides for ease of interchangeability for different rim widths. A rider may easily switch between training wheels, typically having narrow width aluminum rims, to racing wheels, typically having wider carbon fiber rims without requiring brake pad adjustment or spacers to be added to the brake shoes and other adjustments required by the prior art. Also, the brake 10 provides for an easy method of aligning the brake pads 16 to a wheel rim that may be off-center. The brake 10 also provides for custom designable kinematics (e.g., predictable linear braking kinematics) across the entire range of rim widths useable with the brake 10. Additionally, the brake 10 provides for a low side profile and a small frontal footprint so that the brake 10 may be integrated into a fork or frame (e.g., bottom bracket shell or seat stays) so that an aerodynamic cover may be disposed over the brake 10 while fitting within conventional boundaries of a fork or frame of a bicycle. In addition, the brake may be mounted in a conventional manner ahead of the front fork, or on behind the rear seat stays of the bicycle, where its low frontal footprint would also offer aerodynamic advantages over the typical sidepull style bicycle brake.

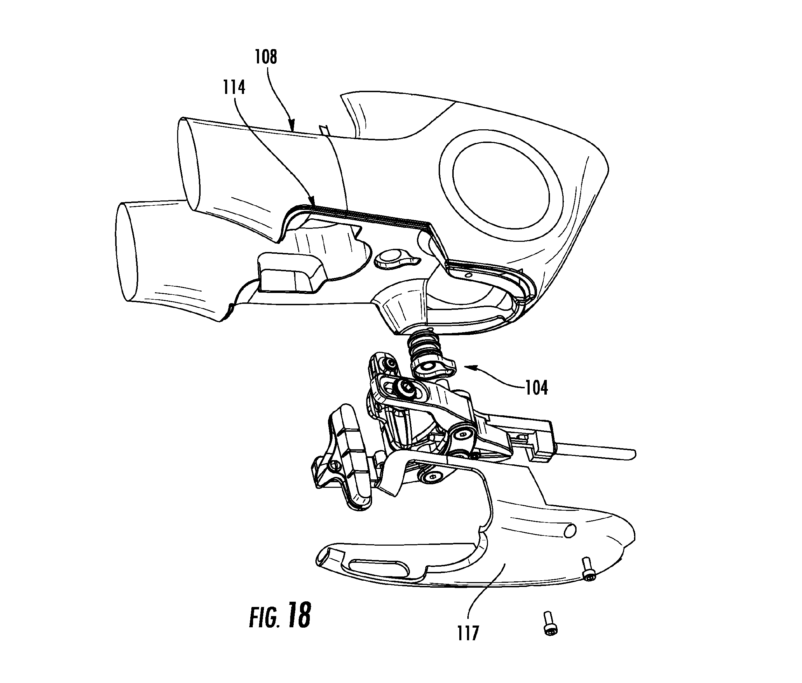

The brake 10 has left and right brake arms 18, 20 that are pivotable about left and right pivot axes 22, 24. Upper portions 26, 28 of the left and right brake arms 18, 20 may have left and right camming surfaces 30, 32 that are driven by cam driver 34. The cam driver 34 is traversed along the length of the left and right camming surfaces 30, 32 under the power of a brake lever 36 or return spring 38. In Figures 2 and 3, the cam driver is shown as being traversed vertically. However, it is also contemplated that the cam driver 34 may be traversed in other directions such as horizontally (see Figure 18) or at an angle if the brake 10 is mounted to the upper portion of the seat stays. By locating the camming surfaces 30, 32 on the upper portions 26, 28 of the left and right brake arms 18, 20, the left and right camming surfaces 30, 32 may be fabricated to be sufficiently long to accommodate wide and narrow rims 14 as desired. The cam driver 34 can be positioned anywhere along the camming surfaces 30, 32 by way of a cam driver adjustment mechanism 42 to adjust the initial default position of the brake and accommodate the wheel rim. For narrow rims, the cam driver 34 is positioned higher up on the camming surfaces 30, 32 by way of the cam driver adjustment mechanism 42, as shown in Figure 3. For wide rims, the cam driver 34 is positioned lower down on the camming surfaces 30, 32 by way of the cam driver adjustment mechanism 42, as shown in Figure 4. By way of example and not limitation, the brake 10 may preferably accept rim widths between 19mm - 28mm. It is also contemplated that the brake 10 may be designed to also accept rim widths less than 19mm or greater than 28 mm up to about 32mm or 35mm. Once the position of the cam driver 34 is set on the camming surfaces 30, 32, a brake lever is used to actuate the brake between a braking position and a release position (i.e., initial default position). The cam driver 34 travels a short travel distance range 40 along the length of the left and right camming surfaces 30, 32 in order to actuate the brake 10 between the braking position and the release position. The brake lever 36 pulls on a cable 44 to actuate the brake 10 and traverse it to the braking position and stop or slow down the bicycle. A return spring 38 traverses the brake 10 to the release position upon release of the brake lever. The camming surfaces 30, 32 may be designed and configured to provide a custom braking kinematics (e.g., linear, progressive, regressive, combinations thereof, etc.) within the short travel range 40. By way of example and not limitation, the kinematics of the brake may be designed to have a steeper slope at the beginning of the travel until the brake pads are brought into contact with the rim, and a smaller slope which is linear when the brake pads are pressing against the rim.

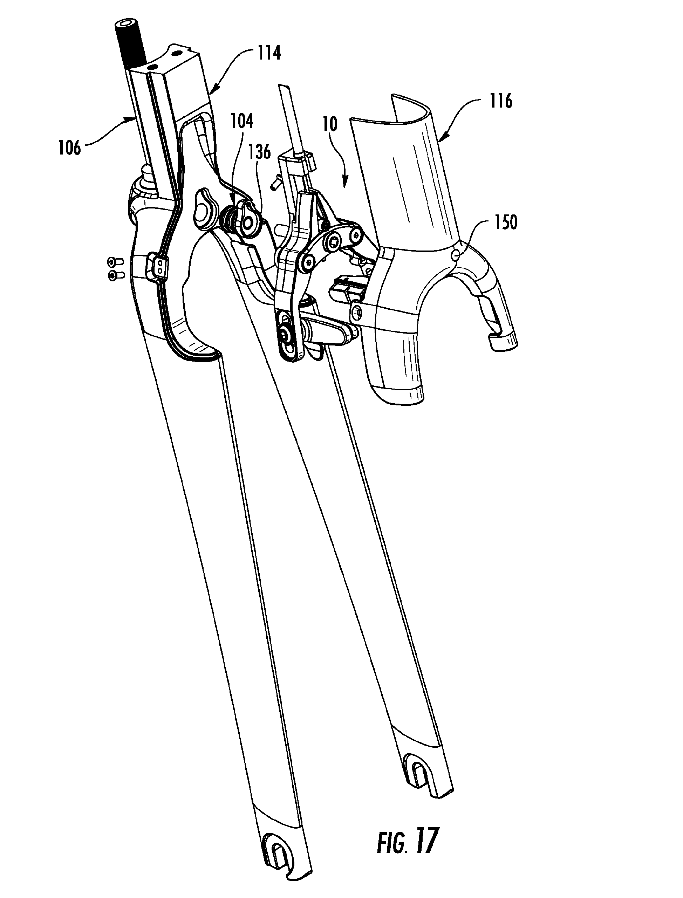

Moreover, by incorporating one or more of the various features discussed herein including but not limited to the placement of the camming surfaces 30, 32 on the upper portions 26, 28 of the left and right brake arms 18, 20, the brake 10 may have (1) a low side profile so that the brake 10, a cover 116 (see Figure 17) and fork may be 80mm or less in relation to its depth and (2) a narrower frontal footprint 126 compared to the frontal footprint of the fork (see Figure 4) or a bottom footprint for rear brakes 10.

Referring to Figure 4, the brake 10 can also be rotated in order to laterally align the brake pads 16 to the wheel rim 14 in the event that the wheel rim 14 is off-center from a hub of the wheel. This lateral adjustment of the brake pads 16 may be accomplished with a standard bicycle tool, namely, an Allen wrench 46 without removal of any parts or substantial work. More particularly, centerline 130 identifies the vertical centerline of the fork of the bicycle which lines up with the brake 10 or centerline of post 84. Centerline 132 identifies the centerline of the rim 14. The rim 14 may be off-center from the centerline of the bicycle frame or fork, either as a result of manufacturing tolerances in the frame or fork, or in the assembly of the wheel itself.. True center would result in the centerline 132 of the wheel matching up and being aligned with the centerline of the frame130. However, true center is typically not achieved. Rather, the rim 14 is trued to itself. As such, as shown in Figure 4, instead of attempting to achieve true center of the rim 14, the brake pads 16 are laterally shifted by rotating the brake 10 about the central post 84 by use of the Allen wrench or movement of the entire brake mechanism itself by way of the person's hands. After rotating the brake 10 to align the brake pads 16 to the rim 14, the brake 10 remains in place as will be discussed below through the means for mounting the brake 10 to the fork or the frame.

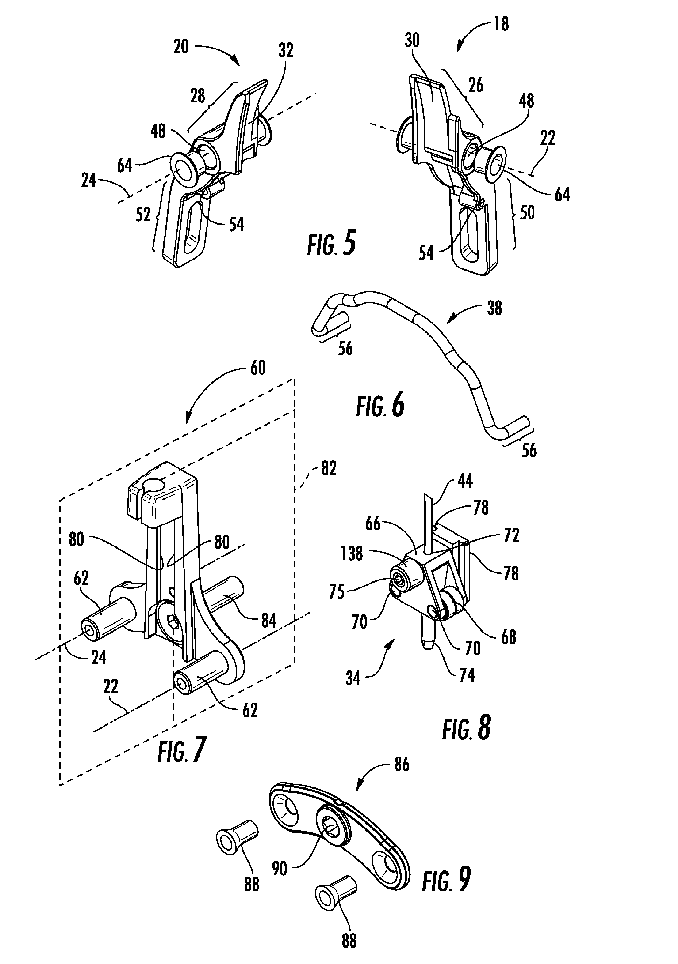

Referring now to Figures 5-9, the left and right brake arms 18, 20 are shown. The left and right brake arms 18, 20 have a mounting hole 48 about which the left and right brake arms 18, 20 pivot and are aligned to the pivot axes 22, 24. The upper portions 26, 28 of the left and right brake arms 18, 20 incorporate the left and right camming surfaces 30, 32. The left and right camming surfaces 30, 32 when assembled into the brake 10 have mirror configurations so that as the cam driver 34 traverses along the length of the left and right camming surfaces 30, 32, the brake pads 14 travel the same distance at a predefined rate (e.g., linear). The lower portions 50, 52 below the pivot axes 22, 24 and the through holes 48 secure the brake pads 16 to the brake arms 18, 20. The lower portions 50, 52 may additionally have receiving holes 54 for receiving distal ends 56 of the return spring 38. The return spring 38 biases the lower portions 50, 52 of the brake arms 18, 20 to the released position when the brake lever 36 is released. In the released position, the brake pads 16 do not contact the wheel rim 14. When the user squeezes the brake lever 36, the cable 44 (see Figure 2) traverses the cam driver 34 upward to spread the upper portions 26, 28 of the brake arms 18, 20 and squeeze the lower portions 50, 52 inward to apply a braking force to the wheel rim 14 by way of the brake pads 16. This traverses the brake pads 16 to the braking position. The user may release the brake lever 36 which allows the return spring 38 to spread open the brake pads 16 to release the wheel rim 14. This traverses the brake pads 16 to the release position or the initial default position.

To assemble the brake 10, a backing plate 60 is mounted to a fork or frame of a bicycle. The left and right brake arms 18, 20 are mounted to the backing plate 60. The backing plate 60 may have two parallel posts 62. The two posts 62 are received into the mounting holes 48 of the left and right brake arms 18, 20. The posts 62 guide the brake arms 18, 20 about its rotational travel. Pivot bushings 64 may be mounted into the through holes 48 to facilitate rotational movement of the left and right brake arms 18, 20 and to prevent frictional resistance.

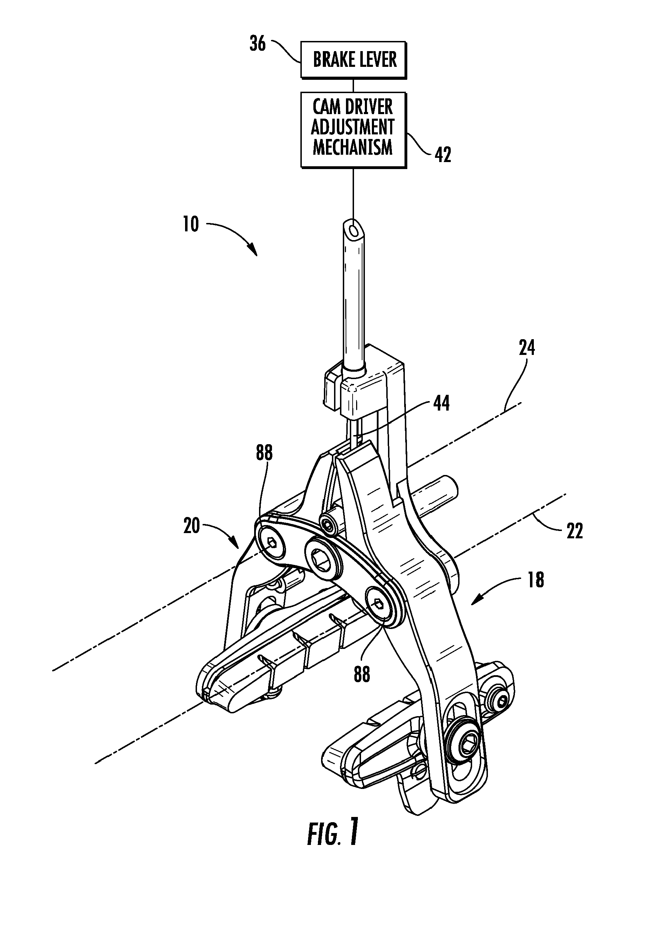

The cam driver 34 (see Figure 8) has a body 66. The body 66 incorporates two rollers 68, one on each side of the body 66. These rollers 68 contact the respective left and right camming surfaces 30, 32 of the left and right brake arms 18, 20. The rollers 68 may be pinned to the body 66 with pins 70. Alternatively, it is also contemplated that the body 66 may incorporate a single roller on either side of the body 66. The body 66 may additionally have a through hole 72 which is sufficiently large to receive the cable 44 but not large enough for a crimp 74. During assembly, the cable 44 is inserted through the through hole 72. The distal end of the cable 44 receives a crimp 74 to prevent the exposed end of the cable 44 from fraying. The cable 44 is secured to the body 66 of the cam driver 34 via a set screw 75. The backside of the body 66 may have a guide 76 having opposed tongues 78. These tongues 78 are received into grooves 80 or a T-shaped channel formed in the backing plate 60. The guide 76 limits the travel of the cam driver 34 to a linear direction defined by the grooves 80 in the backing plate 60. The grooves 80 and the post 62 are preferably symmetrical with each other about a vertical plane 82. The backing plate additionally has a central post 84 which extends in an opposite direction from the post 62 and is used to mount the brake 10 to the bicycle 12. The post 84 is mounted to the fork or frame (e.g., adjacent to bottom bracket shell). A cover plate 86 (see Figure 9) is mounted over the brake arms 18, 20 and secured to the post 62 with countersunk screws 88. The cam driver 34 additionally has a nose 138 (see Figures 1 and 8) that rests on the cover plate 86 during the assembly process. The nose 138 may rest on top of the cover plate 86 (see Figure 1) to position the cam driver 34 while inserting the cable 44 into the cam driver 34, securing the cable via a set screw 75 and finally placing a crimp 74 on the cable 44. The center of the cover plate 86 may have a hex opening 90 to adjust the lateral position of the brake pads 16, as shown in Figure 4. An Allen wrench 92 may be received into the hex opening 90 to rotate the brake 10 and adjust the lateral position of the brake pads 16 so as to align the brake pads 16 to the wheel rim, as discussed above.

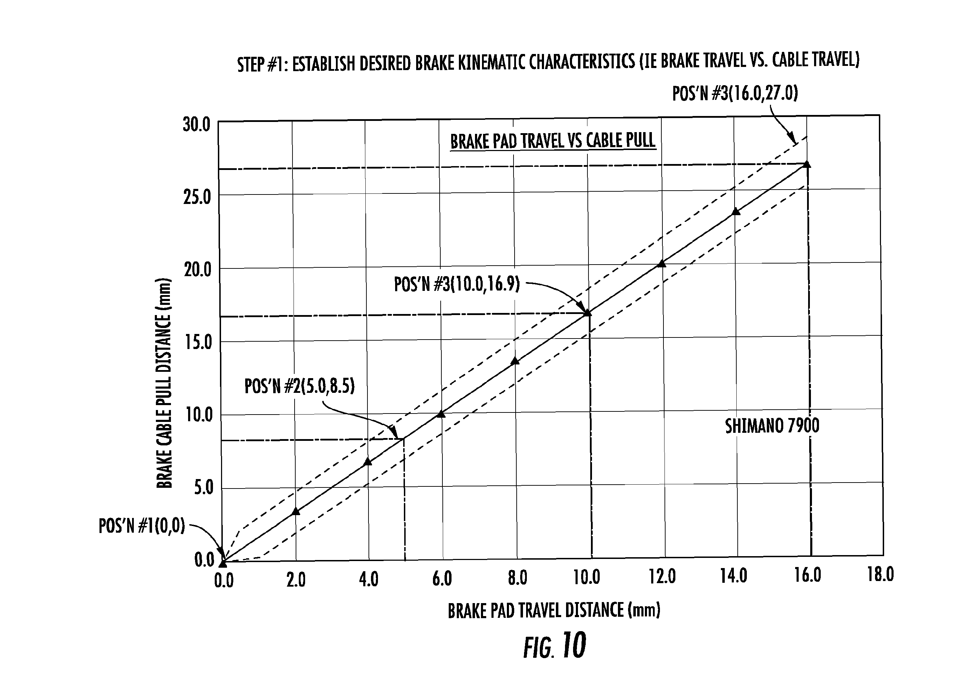

Referring now to Figures 10 - 15, a methodology of creating the spline of the cam profiles of the left and right camming surfaces 30, 32 is shown. The first step is shown in Figure 10, namely, the step of establishing desired brake kinematic characteristics. In the example shown in Figure 10, the brake kinematic characteristic is described in relation to a brake cable pull distance as a function of brake pad travel distance. However, other ways of describing the brake kinematic characteristics are also contemplated. By way of example and not limitation, brake cable pull distance may be graphed or calculated as a function of braking force. Another example would be brake cable pull distance as a function of angular rotation of the brake arm 18, 20. However, for the purposes of simplicity and in this discussion, the brake kinematic characteristic is described in relation to brake cable pull distance as a function of brake pad travel distance. In the example discussed herein, the brake kinematic is shown and described as being linear. However, other kinematics are also contemplated such as progressive, exponential, regressive or combinations thereof.

Preferably, the brake kinematic characteristic is linear. This means that for each unit displacement of the brake cable, there is a unit displacement of the brake pad travel distance or a unit rotational displacement of the brake arm. In mathematical terms, the brake kinematic characteristic may be described as Y=MX. The M describes the rate at which the brake pad travel distance increases for each incremental unit of brake cable pull distance. As used herein, the linear nature of the brake kinematic characteristic would still be considered linear when the brake cable pull distance is within 10%, and more preferably within 5% of the desired brake cable pull distance utilizing the mathematical equation Y=MX. Some deviation from linear is allowed without deviating from the baseline characteristic (e.g., linear as shown in Figure 10, progressive, regressive, combination, etc.). In Figure 10, by way of example and not limitation, the brake kinematic characteristic is described by the equation Y=1.68X wherein 1.68 is calculated from the graph shown in Figure 10 as M=((16.9-8.5)/(10-5)). Accordingly, the actual brake kinematic characteristic of the brake may be anywhere between Y=1.85X and Y=1.51X which is plus or minus 10% of 1.68. As long as the brake kinematic functions within these parameters, the brake kinematic is still considered to be linear. Linear is defined as being between plus or minus 10% to plus or minus 5% of the calculated slope M in the equation Y=MX. The allowance from linear is represented by the dash lines in Figure 10. Although a slope of 1.68 was used in this example, the slope may be designed to be at different slopes for industry standards or as desired.

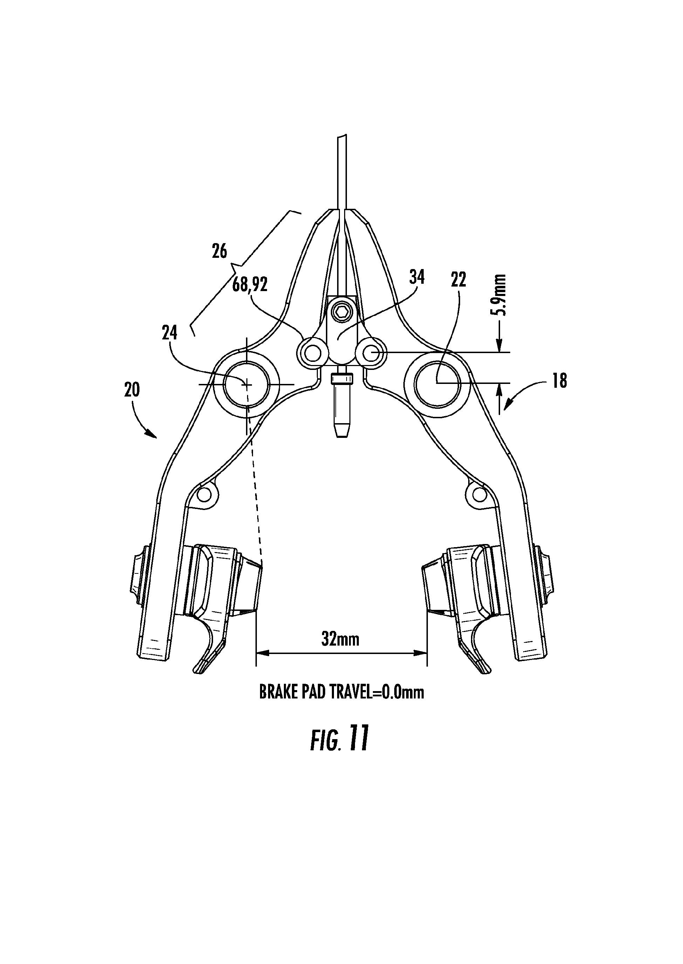

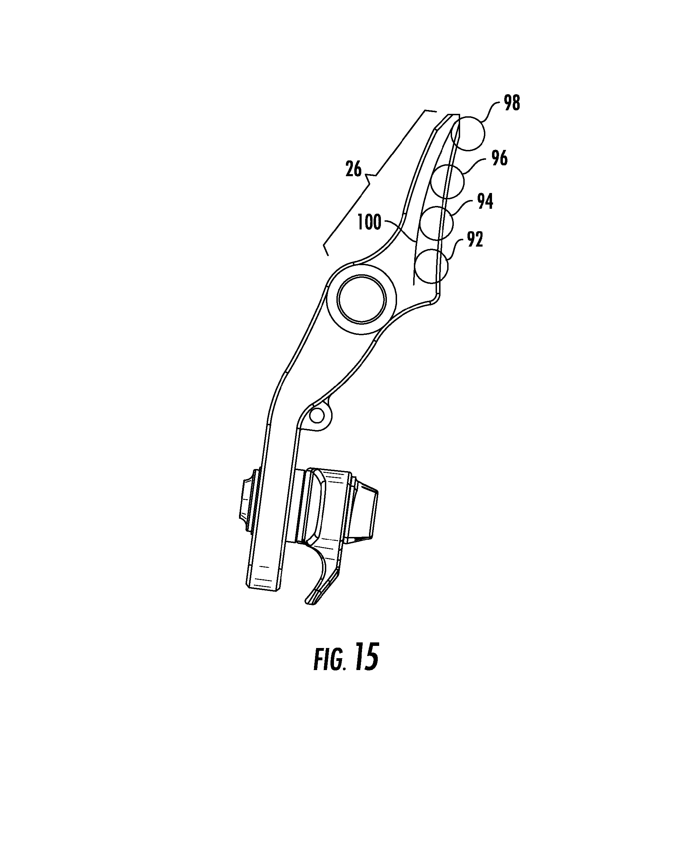

To define the profile of the camming surface 30, 32 that matches the desired brake kinematics characteristics shown in the graph of Figure 10, various snapshots of the cam driver 34 and the brake arm 18, 20 are taken at different positions as shown in Figures 11-14. Thereafter, a spline is created that connects each of the snapshots of the cam drivers, as shown in Figure 15. This process is explained further below.

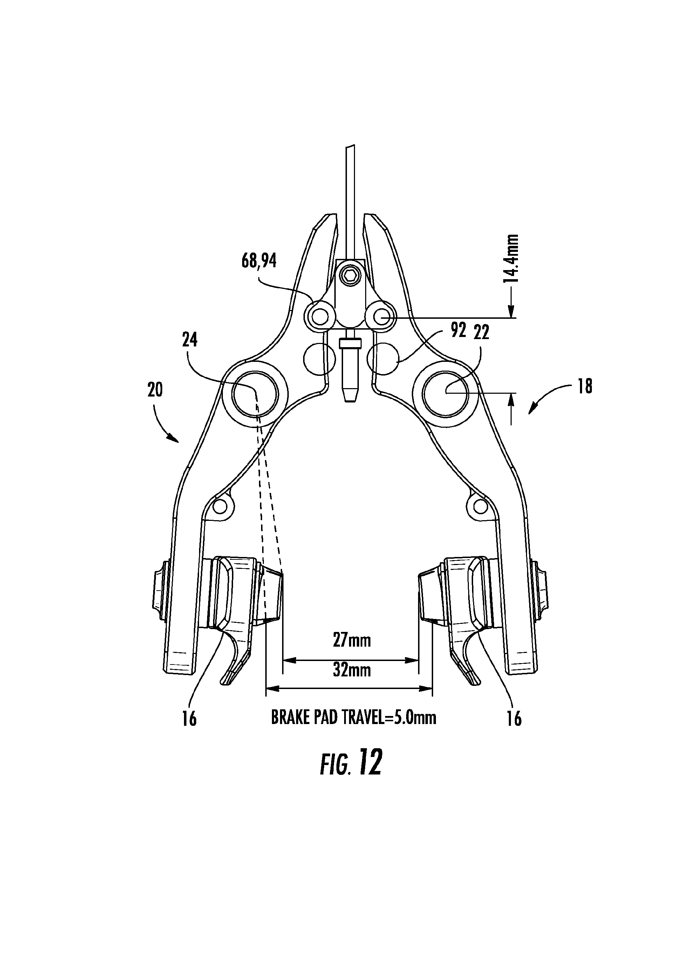

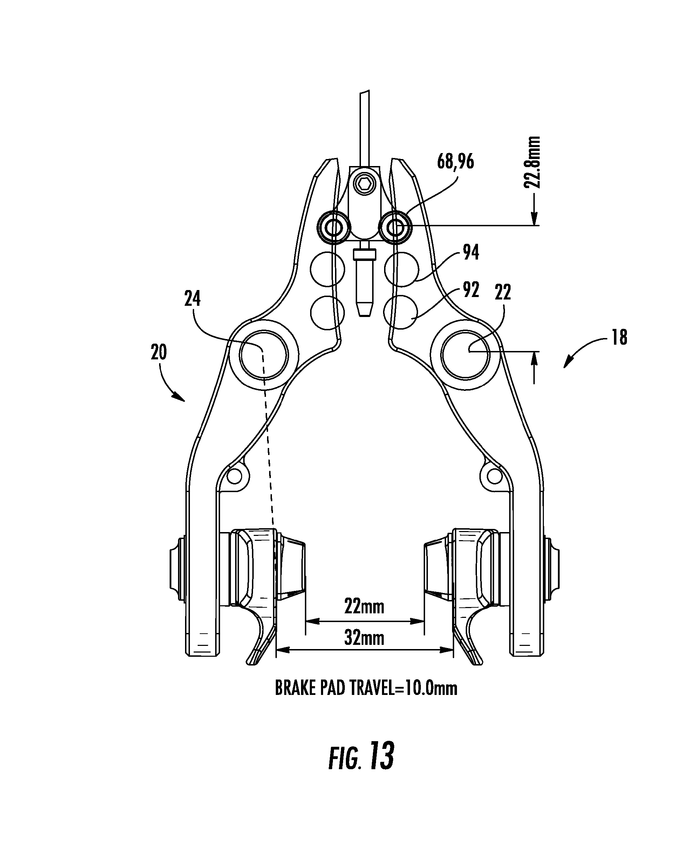

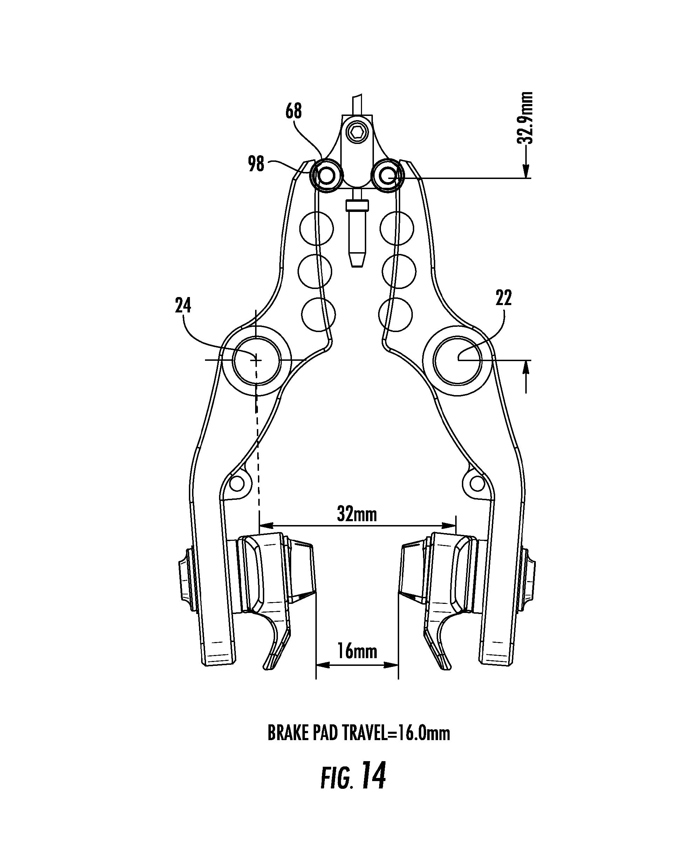

Referring now to Figure 10, the slope M of the brake kinematic characteristic is determined. Once the slope M of the brake kinematic characteristic is determined, the brake kinematic is graphed as shown in Figure 10 and at least three points or positions based on the slope of the brake kinematic characteristic are calculated. In our example, four different positions are utilized to create the cam profile of the camming surface 30, 32. These positions include a brake pad travel distance of zero (0) (see Figure 11) which defines the maximum gap between the brake pads 16 with a brake pad gap of 32mm. Another position is taken as the smallest gap between the brake pads 16 of 16mm (see Figure 14). In this position, the brake pad travel distance is 16 mm (see Figure 14) from the maximum gap shown in Figure 11. Two additional points were chosen between these two extremes. In our example, a brake pad travel distance of 5 and 10 mm from zero (0) were chosen, as shown in Figures 12 and 13. For these four different positions, namely, 0 mm, 5mm, 10 mm and 16 mm and the corresponding brake cable pull distance of 0 mm, 8.5 mm, 16.9 mm and 27 mm correspondingly are calculated or taken off of the graph shown in Figure 10. In the example provided herein, four positions are preferably taken; however, it is contemplated that 3 or more positions may be used to create or define the cam profile.

Referring now to Figure 11, the brake arms 18, 20 are positioned to be at their maximum opening. In the example discussed herein, the brake arms are positioned so that the brake pads 16 are opened to have the maximum opening of 32 mm. The cam driver 34 is brought to its lowest position. Outlines 92 of the rollers 68 are traced on the upper portions 26, 28 of the brake arms 18, 20. These outlines 92 are shown in Figure 12. This can be done through a computer aided drafting program. Thereafter, the brake arms 18, 20 are rotated about pivot axis so that each of the brake pads 16 travel 5 mm inward from the zero (0) position, as shown in Figure 12. The cam driver is moved upward 8.5 mm which is represented as being 14.4 mm above the rotating axis 22, 24 of the brake arms 18, 20. Outlines 94 of the rollers 68 are traced on the upper portions 26, 28 of the brake arms 18, 20. Next, the cam driver 34 is traversed upwards to 8.4 mm (16.9 mm - 8.5 mm) which is represented as being 22.8mm above the rotating axis 22, 24 of the brake arms 18, 20, as shown in Figure 13. Also, the brake arms 18, 22 are rotated so that the brake pads 16 travel inward 5mm and are 22 mm apart, as shown in Figure 13. Outlines 96 of the rollers 68 are traced on the upper portions 26, 28 of the brake arms 18, 20. Once again, the brake arms 18, 20 are rotated so that the brake pads 16 are traversed 16 mm inward from the zero (0) position. Likewise, the cam driver 34 is traversed to be offset 16 mm from the zero (0) position which is represented as being 32.9mm from the rotating axis 22, 24, as shown in Figure 14. Outlines 98 of the rollers 68 at this new position are traced on the upper portions 26, 28 of the brake arms 18, 20. These adjustments correspond to the established brake kinematics characteristics. Each of the tracings 92, 94, 96 and 98 are preserved on the upper portions 26, 28 of the brake arms 18, 20, as shown in Figure 15. A spline 100 is created based on each of the tracings 92, 94, 96, 98 wherein the spline 100 is tangent to each of the circular tracings 92, 94, 96, 98. This spline 100 defines the camming profiles which define the camming surfaces 30, 32. The spline is defined as a B-spline, P-spline, or other splines known in the art or combinations thereof.

The above methodology for creating the spline 100 that defines the camming surfaces 30, 32 may be accomplished in a variety of ways. By way of example and not limitation, instead of brake pad travel, brake arm rotation in relation to brake cable pull distance may be utilized. Other ways and functions are also contemplated within the scope of this disclosure. As a further method for creating or defining the spline 100, the same 100 which defines the cam profile may be developed utilizing mathematical technique(s) analogous to the graphic cam development method described herein. For the purposes of illustrating an exemplary mathematical method and not for the purposes of limitation, the mathematical method may comprise establishing the X,Y Cartesian coordinates of the rollers 68, for each of the brake arm 18, 20 positions as illustrated in Figs. 11-14. The roller 68 positions are then rotated into each of the brake arm 18, 20 positions (see Figure 15) using a mathematical transformation for each position, corresponding to the brake arm angular displacement for said roller position from the fully open position. This establishes the Cartesian X, Y coordinates of the roller centers 68, transposed into the full open brake position. Thereafter, a spline function is created through the roller 68 centers, by fitting a spline function thru the transposed roller X,Y center points. This final brake arm cam surface spline profile is then generated by offsetting the spline through the roller centers by a value equal to a radius of the roller 68. This mathematical technique is exemplary and other techniques whether graphical or mathematical which known in the art or developed in the future are contemplated.

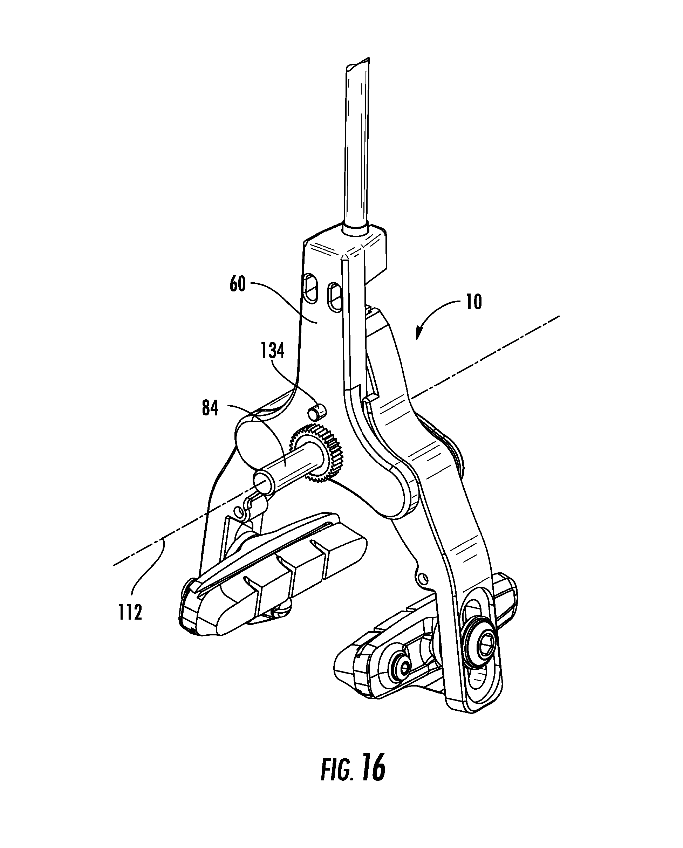

Referring now to Figure 16, a rear view of the brake 10 is shown. The brake 10 is mounted by way of a post 84. This post 84 may be screwed into fitting 104 (see Figure 17) which may be embedded into a fork 106 or frame 108 (e.g., bottom bracket shell; see Figure 18) of a bicycle. The post 84 is freely rotatable from the backing plate 60 since the post 84 is a separate part from the backing plate 60, as shown in Figure 7. To mount the brake 10 to the fork 106 or frame 108, the fitting 104 is embedded into the fork 106 or frame 108. The fitting may be embedded on the frame adjacent to or on the bottom bracket shell and also adjacent to the upper side of the seat stays. The backing plate 60 is first mounted to the fork 106 or frame 108 by screwing the post 84 into the fitting 104. After the backing plate 60 is mounted to the fork 106 or frame 108, the rest of the brake components are mounted to the backing plate 60. As shown in Figure 16, a serrated washer 110 is disposed between the backing plate 60 and the fitting 104. The serrated washer 110 fixes the angular position of the brake 10 with respect to an axis 112 defined by the post 84 upon tightening of the post 84 to the fitting 104. With the brake 10 attached to the fork 106 or frame 108 (i.e. bottom bracket area shown in Figure 18), the brake 10 is received into a cutout 114 of the fork 106 for the frame 108. A cover 116 is placed over the brake 10 and secured to the fork 106 by way of screws 118. To align the brake pads 16 to the wheel rim, the allen wrench can be inserted into the front hole 150 to engage the hex hole in the cover plate 86. As such, this brake 10 can accept a wide range of wheel rim sizes, provide a linear or any other custom designed brake kinematics at any slope desired and also provides for easy lateral adjustments for the brake pads 16.

The rotation of the brake 10 as described in relation to Figure 4 is limited by an interference between a pin 134 (see Figure 16) formed behind the backing plate 60 and the fitting 104. In particular, the pin 134 is disposed within a protruding flange 136 of the fitting 104 when the backing plate 60 is mounted to the fork or frame. As such, when the brake 10 is rotated as shown in Figure 4, the pin 134 is bounded by and limited by the protruding flange 136. In this manner, the brake 10 is built with the safety mechanism to prevent the brake being rotated to a point where it might damage the brake cover 116 or 117.

Figures 17 and 18 show the brake 10 mounted in an integrated fashion to the fork 106 or the frame 108 so that the brake 10 is out of the normal exterior airflow and aerodynamics of the bicycle is improved by allowing the cover 116 to provide such decreased wind drag. The brake 10 may have a low side profile to allow the brake 10, cover 116 and the fork 106 to fit within conventional fork depth requirements. In particular, the brake 10 may have a sufficiently low side profile to allow the brake, cover 116 and the fork 106 to be 80mm or less deep. Also, the frontal footprint of the brake 10 may be narrower compared to the frontal footprint 126 of the brake 10, as shown in Figure 4 to allow room for the cover and to mitigate interference with wind movement and facilitate aerodynamics.

Although the brake 10 may be integrated into the fork 106, it is also contemplated that the brake 10 may be attached by way of a brake nut 120 and spacer 122. The serrated washer 110 is disposed behind the spacer 122. When the brake 10 is mounted to the fork 106 or frame 108, the brake nut 120 and the spacer 122 sandwiches the fork 106 or the frame 108. The serrated washer 110 holds the angular rotation of the brake 10 with respect to the axis of the post 84. The spacer 122 offsets the brake pads 16 so that the brake pads 16 do not interfere with the legs 124.

The various aspects of the brake 10 discussed herein relate to an brake system that is self contained. However, it is also contemplated that the brake arms may be mounted directly to the legs of the fork, chain stays or seat stays of the bicycle frame.

The above description is given by way of example, and not limitation. Given the above disclosure, one skilled in the art could devise variations that are within the scope and spirit of the invention disclosed herein, including various ways of actuating the brake arms. Further, the various features of the embodiments disclosed herein can be used alone, or in varying combinations with each other and are not intended to be limited to the specific combination described herein. Thus, the scope of the claims is not to be limited by the illustrated embodiments.

## Claims

1. A brake for a bicycle, the brake comprising:
a first brake arm pivotable about a first pivot axis, an upper portion of the first brake arm defining a first camming surface, a lower portion of the first brake arm being capable of receiving a first brake pad;
a second brake arm pivotable about a second pivot axis, the second pivot axis being set at a fixed distance away from the first pivot axis, an upper portion of the second brake arm defining a second camming surface, the first and second camming surfaces having a mirror configuration of each other, a lower portion of the second brake arm being capable of receiving a second brake pad;
a cam driver disposed between the first and second camming surfaces, the cam driver maintaining contact with the first and second camming surfaces between unactuated and actuated positions of the brake;
a brake lever secureable to a handlebar of the bicycle for actuating the brake;
wherein the first and second camming surfaces have a curved configuration so that a linearly increasing brake force is applied to a rim of the bicycle for each unit of displacement of the brake lever.

2. The brake of Claim 1 wherein the curved configuration of the first and second camming surfaces allow for a linearly increasing brake force applied to the rim of the bicycle for two different wheel rim sizes.

3. The brake of Claim 1 wherein the first and second brake arms are directly mounted to a common plate so that the first brake arm pivots about the first pivot axis and the second brake arm pivots about the second pivot axis, and the common plate is mounted to a fork of the bicycle.

4. The brake of claim 2 wherein the common plate is pivotable with respect to the fork or the frame of the bicycle to laterally adjust brake pads of the brake to align the brake pads to an off center wheel rim.

5. The brake of Claim 1 wherein the cam driver is positioned on the first and second camming surface for rim widths between 19-35 mm.

6. The brake of Claim 1 wherein a unit linear displacement of the cam driver translates into a unit angular displacement of the lower portion of the first and second brake arms so that a unit displacement of the brake lever produces a linear rise in brake force.

7. The brake of Claim 1 wherein lengths of the first and second camming surfaces are sufficiently long so that a linear brake force is applied to wheel rim for rim widths between 19 mm and 35 mm by solely changing a position of the cam driver on the first and second camming surfaces.

8. A method of fabricating a brake arm for providing a linear rise in brake force for each unit displacement of a brake lever, the method comprising the steps of:
selecting first, second and third linear positions of the cam driver;
selecting first, second and third angular positions of a lower portion of a brake arm or linear displacements of the brake pads wherein the spacings between the first, second and third linear positions of the cam driver are proportional the spacings between the first, second and third angular positions of the lower portion or the linear displacements of the brake pads;
mapping first, second and third positions of the cam driver on an upper portion of the brake arm;
creating a spline which connects the first, second and third positions of the cam driver on the upper portion of the brake arm.

9. The method of Claim 7 wherein the step of mapping includes the steps of:
positioning the cam driver at a first linear position and the brake arm at a first rotary position;
marking the cam driver on the brake arm to identify the first position of the cam driver on the brake arm;
positioning the cam driver at a second linear position and the brake arm at a second rotary position;
marking the cam driver on the brake arm to identify the second position of the cam driver on the brake arm;
positioning the cam driver at a third linear position and the brake arm at a third rotary position;
marking the cam driver on the brake arm to identify the third position of the cam driver on the brake arm.

10. The method of Claim 7 wherein the creating the spline step includes the step of creating a curved line defined by the marks of the cam driver of the first, second and third positions.

11. The method of Claim 7 wherein the marking step includes the step of outlining a contact surface of the cam driver on the brake arm.

12. The method of Claim 7 wherein the mapping and creating steps are accomplished with a computer aided drafting computer program having a representation of the cam driver and the brake arm.

13. The method of Claim 7 wherein the creating step includes the step of defining the spline as a T-spline, P-spline or a combination thereof.

14. The method of Claim 7 wherein the creating step is accomplished by way of a mathematical model.
